# DEMANDE DE BREVET EUROPEEN

(11) **EP 2 908 023 A1**
(43) Date de publication de la demande: **19.08.2015**
(21) Numéro de dépôt: 15155111.6
(22) Date de dépôt: 13.02.2015
(51) Int. Cl.: F16F 13/26

(54) **Support antivibratoire hydraulique pilotable**

(30) Priorité: 14.02.2014 FR 1451154
(71) Demandeur: HUTCHINSON, 75008 Paris (FR)
(72) Inventeur: Lemaire, Gabriel, 28200 Saint-Denis-les-Ponts (FR); Bellamy, Alain, 41310 AMBLOY (FR)
(74) Mandataire: Cabinet Plasseraud

(57) **Abrégé**

Support antivibratoire hydraulique pilotable comprenant un circuit hydraulique principal comprenant une chambre de travail (A), une chambre de compensation (B) et un premier passage étranglé (C), et une chambre hydraulique auxiliaire (E) séparée de la chambre de travail par un clapet de découplage (26, 29, 31) et communiquant avec le circuit hydraulique principal par l'intermédiaire d'un deuxième passage étranglé (D) de fréquence de résonance inférieure à 5 Hz. La chambre auxiliaire est séparée d'une chambre pneumatique (P) par une paroi mobile (6a), et un dispositif de commande (15) est prévu pour sélectivement soit mettre à l'air libre la chambre pneumatique, soit vider cette chambre pneumatique.

## Description

La présente invention est relative aux supports antivibratoires hydrauliques pilotables.

Plus particulièrement, l'invention concerne un support antivibratoire hydraulique pilotable destiné à être interposé aux fins d'amortissement entre des premier et deuxième éléments rigides, ce support antivibratoire comprenant :
- des première et deuxième armatures destinées à être fixées aux deux éléments rigides à réunir,
- un corps en élastomère qui relie entre elles les première et deuxième armatures et qui délimite au moins partiellement une chambre de travail,
- une chambre de compensation déformable qui communique avec la chambre de travail par l'intermédiaire d'un premier passage étranglé, la chambre de compensation, la chambre de travail et le premier passage étranglé formant un volume hydraulique rempli de liquide, le premier passage étranglé ayant une fréquence de résonance comprise entre 5 et 20 Hz,
- une chambre auxiliaire,
- un clapet de découplage comprenant une membrane de découplage en élastomère qui sépare la chambre de travail et la chambre auxiliaire et des première et deuxième grilles de butée communiquant respectivement avec la chambre de travail et avec la chambre auxiliaire, la membrane de découplage étant disposée entre les première et deuxième grilles de butée et à distance de chaque grille de butée pour pouvoir librement débattre entre lesdites première et deuxième grilles de butée,
- un dispositif de commande adapté pour sélectivement bloquer la membrane de découplage.

Le document EP-A-0115417 décrit un support antivibratoire de ce type, dans lequel la chambre auxiliaire est une chambre pneumatique et le dispositif de commande peut sélectivement isoler ou relier à l'air libre cette chambre auxiliaire.

La présente invention a notamment pour objet d'améliorer l'efficacité des supports antivibratoires du type ci-dessus.

A cet effet, selon l'invention, un support antivibratoire du genre en question est caractérisé en ce que la chambre auxiliaire est remplie de liquide et communique avec ledit volume hydraulique par l'intermédiaire d'un deuxième passage étranglé ayant une fréquence de résonance inférieure à 5 Hz,
en ce qu'il comporte en outre une chambre de commande pneumatique séparée de la chambre auxiliaire par une paroi mobile,
et en ce que le dispositif de commande est adapté pour sélectivement soit mettre à l'air libre ladite chambre de commande pneumatique, soit vider ladite chambre de commande pneumatique de façon à bloquer ladite paroi mobile.

Grâce à ces dispositions, on sépare la fonction de limitation de débattement de la membrane de découplage et la fonction de désactivation du découplage, ce qui permet :
- d'une part, d'optimiser le débattement de la membrane de découplage notamment pour qu'elle ne perturbe pas le fonctionnement du premier passage étranglé (on cherche généralement à limiter le débattement de la membrane de découplage à moins de 1 mm, voire moins de 0,5 mm),
- et d'autre part, d'optimiser la désactivation du découplage en permettant un grand débattement à la paroi mobile susmentionnée, ce qui permet de limiter fortement le volume d'air restant dans la chambre pneumatique lorsqu'on la vide.

De plus, la chambre auxiliaire est toujours à la même pression statique ou quasi-statique que la chambre de travail, grâce à la présence du deuxième passage étranglé, de sorte que la membrane de découplage est toujours sensiblement à égale distance des deux grilles de butée, ce qui permet un fonctionnement optimal du clapet de découplage.. En outre, le dimensionnement du deuxième passage étranglé fait qu'il est neutralisé aux fréquences relativement élevées concernées par le découplage, de sorte qu'il ne perturbe pas le fonctionnement du clapet de découplage.

Dans divers modes de réalisation du support antivibratoire selon l'invention, on peut éventuellement avoir recours en outre à l'une et/ou à l'autre des dispositions suivantes :
- le dispositif de commande comporte un clapet de sortie d'air autorisant normalement uniquement la sortie d'air depuis la chambre de commande pneumatique vers l'atmosphère et non l'inverse, et un dispositif de mise à l'air actionnable pour sélectivement mettre à l'air libre ladite chambre de commande pneumatique ;
- la chambre de commande pneumatique est délimitée entre une cuvette et la paroi mobile qui est une membrane de commande en élastomère, le clapet de sortie d'air communiquant avec la chambre de commande pneumatique par une ouverture ménagée dans la cuvette et la membrane de commande étant adaptée pour se plaquer contre la cuvette sous l'effet du clapet de sortie d'air lorsque le dispositif de mise à l'air n'est pas actionné ;
- la chambre de compensation est séparée de la chambre de travail par une cloison rigide qui est solidaire de la deuxième armature, ladite cloison rigide comportant les grilles de butée, le premier passage étranglé, le deuxième passage étranglé, la chambre auxiliaire et la membrane de découplage ;
- la cloison rigide comporte des première et deuxième plaques superposées, la première plaque comprenant la première grille de butée, la deuxième grille de butée étant serrée entre les première et deuxième plaques, la deuxième plaque comprenant une ouverture disposée en correspondance avec la chambre auxiliaire et obturée de façon étanche par ladite paroi mobile, constituée par une membrane de commande en élastomère ;
- la membrane de découplage est montée entre les première et deuxième grilles de butée avec un jeu inférieur à 1 mm par rapport à chaque grille et la paroi mobile est mobile sur un débattement de plusieurs millimètres par rapport à sa position médiane.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en perspective d'un support antivibratoire selon une forme de réalisation de l'invention,
- la figure 2 est une vue en coupe axiale du support antivibratoire de la figure 1,
- la figure 3 est une vue agrandie du détail III de la figure 2, et
- la figure 4 est une vue en coupe radiale du support antivibratoire des figures 1 et 2.

Sur les différentes figures, les mêmes références désignent des éléments identiques ou similaires.

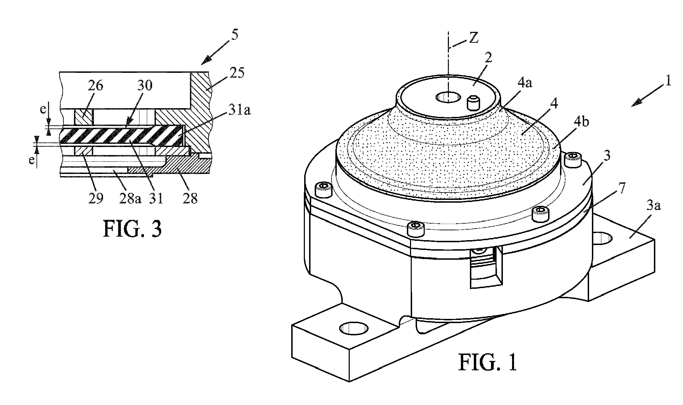

La figure 1 représente un support antivibratoire hydraulique pilotable 1, comportant :
- une première armature rigide 2 présentant par exemple la forme d'une embase métallique et destinée par exemple à être fixée au moteur d'un véhicule,
- une deuxième armature rigide 3, par exemple une armature annulaire en métal ou matière plastique, qui est destinée à être fixée par exemple à la caisse du véhicule directement par l'intermédiaire d'au moins un organe de fixation 3a,
- un corps en élastomère 4 capable de supporter notamment les efforts statiques dus au poids du moteur du véhicule et reliant les première et deuxième armatures 2, 3, ce corps en élastomère pouvant présenter par exemple une forme de cloche qui s'étend axialement selon un axe par exemple vertical Z, entre un sommet 4a adhérisé et surmoulé sur la première armature 2 et une base annulaire 4b surmoulée et adhérisée sur la deuxième armature 3.

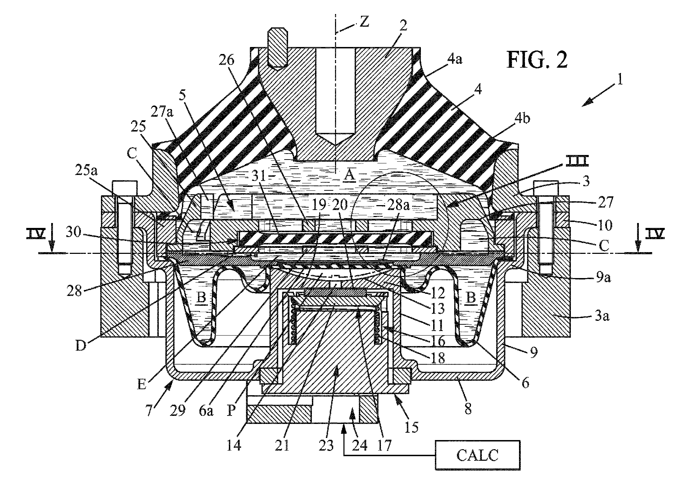

Comme représenté sur la figure 2, le support antivibratoire 1 comporte en outre une cloison rigide 5 solidarisée avec la deuxième armature 3 et appliquée de façon étanche contre la base 4b du corps en élastomère, en délimitant avec celui-ci une chambre de travail A hydraulique. Une membrane souple en élastomère 6 formant soufflet, appliquée de façon étanche contre la cloison 5 à l'opposé de la chambre de travail A, en délimitant avec ladite cloison 5 une chambre de compensation B hydraulique qui communique avec la chambre de travail A par un passage étranglé C. La chambre de travail, la chambre de compensation B et le passage étranglé C forment ensemble un volume hydraulique rempli de liquide, notamment du glycol ou autre.

Le passage étranglé C est dimensionné pour présenter une fréquence de résonance comprise entre 5 et 20 Hz, typiquement entre 8 et 12 Hz.

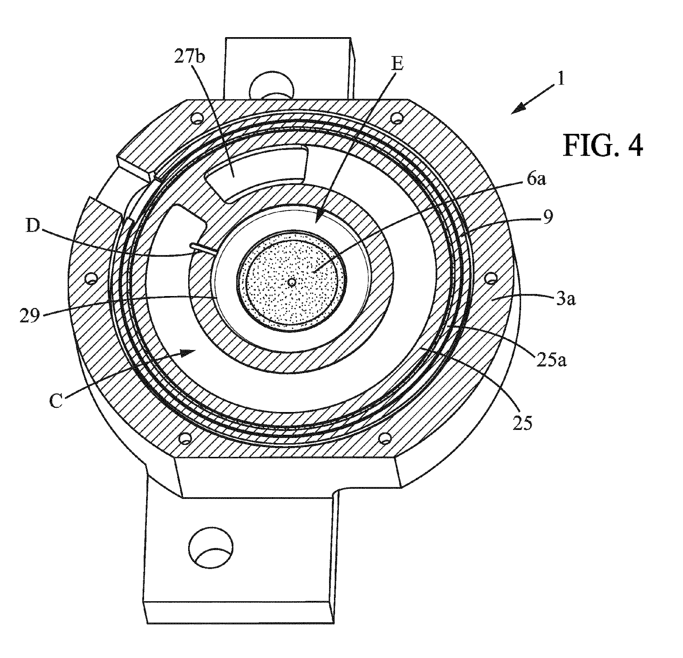

Comme représenté sur les figures 2 et 4, e support antivibratoire 1 comporte en outre une chambre auxiliaire E hydraulique, remplie de liquide, qui communique avec ledit volume hydraulique A, B, C par un autre passage étranglé D lui-même rempli de liquide. Le passage étranglé D est de très faible section, et il est dimensionné de façon à présenter une fréquence de résonance inférieure à 5 Hz, par exemple environ 1 à 2 Hz (la fréquence de coupure de ce passage D, notamment la fréquence de coupure à 3dB, est également inférieure à 5 Hz). Plus particulièrement, le passage étranglé D communique avec le passage étranglé C dans l'exemple considéré ici. Ce passage étranglé D pourrait aussi se présenter sous la forme d'un petit trou (non représenté) ménagé dans la membrane de découplage 31 qui sera décrite ci-après.

Le support antivibratoire 1 comporte une chambre pneumatique P séparée de la chambre auxiliaire E par une paroi mobile qui peut présenter toutes formes connues (notamment piston, membrane souple ou autres). Dans l'exemple considéré ici, la paroi mobile est une membrane de commande souple en élastomère, et cette membrane de commande peut avantageusement être une partie 6a de la membrane 6 susmentionnée, notamment une partie centrale 6a de ladite membrane 6.

Dans l'exemple représenté sur la figure 1, le support antivibratoire hydraulique comporte un couvercle 7, réalisé par exemple en matière plastique moulée, qui recouvre le soufflet 6 vers le bas.

Dans l'exemple représenté, le couvercle 7 peut comporter un fond 8 annulaire, prolongé à sa périphérie extérieure par une paroi latérale 9 annulaire s'étendant vers le haut, laquelle paroi latérale 9 forme un ressaut annulaire 9a et se termine par une bride annulaire extérieure 10 qui peut par exemple être prise en sandwich entre la deuxième armature 3 et l'organe de fixation 3a, lesquels sont fixées ensemble par tout moyen connu, par exemple par des vis.

Le couvercle 7 peut en outre comporter une paroi annulaire intérieure 11 qui prolonge vers le haut la périphérie intérieure du fond 8. Cette paroi annulaire intérieure 11 s'étend jusqu'à une paroi radiale 12 qui délimite vers le bas la chambre de commande pneumatique P.

Plus particulièrement, la face supérieure 13 de la paroi radiale 12 peut être concave, de façon à former une cuvette qui délimite ladite chambre de commande pneumatique P.

Dans l'exemple représenté, la cloison rigide 5 et la périphérie extérieure de la membrane 6 sont pincées entre la base 4b du corps en élastomère 4 et le ressaut 9a du couvercle, tandis que la périphérie de la partie 6a de la membrane 6 est pincée entre la périphérie de la paroi radiale 12 et la cloison rigide 5.

La chambre pneumatique P communique avec l'atmosphère par l'intermédiaire d'une ouverture 14 percée dans la paroi radiale 12 du couvercle 7, et par l'intermédiaire d'un dispositif de commande 15 fixé à l'intérieur de la paroi annulaire intérieure 11 susmentionnée du couvercle 7.

Ce dispositif de commande 15 comporte un clapet de sortie d'air 16 qui est adapté pour, en fonctionnement normal (c'est-à-dire hors état d'ouverture forcée), autoriser uniquement la sortie d'air depuis la chambre pneumatique P vers l'atmosphère et non l'inverse. Le clapet de sortie d'air 16 peut comporter un organe de clapet 17 qui est sollicité élastiquement par un ressort 18 de façon à être appliqué contre un siège de clapet 19. Dans l'exemple considéré ici, le siège de clapet 19 est formé par la face inférieure de la paroi annulaire 12.

Le volume mort défini à l'intérieur de l'ouverture 14 entre la surface intérieure 13 et le siège de clapet 19, est ainsi réduit au maximum. Ce volume mort est avantageusement compris entre 0 et 0,3 cm³.

L'organe de clapet 17 peut comporter par exemple :
- un joint 20 en élastomère ou autre, adapté pour s'appliquer avec étanchéité contre le siège de clapet 19,
- un coulisseau 21 comportant au moins une partie ferromagnétique, portant le joint 20 et sollicité vers la paroi radiale 12 par le ressort 18.

Le dispositif de commande 15 comporte en outre un électro-aimant 23, relié par exemple par un connecteur électrique 24 à des moyens de commande externes appartenant au véhicule, tels que le calculateur de bord CALC. Sur commande du calculateur CALC, l'électro-aimant 23 produit un champ magnétique qui déplace l'organe de clapet 17 en l'écartant du siège de clapet 19, ce qui met la chambre pneumatique P en communication avec l'atmosphère. On notera que l'électro-aimant 23 pourrait être remplacé par tout autre actionneur, notamment électrique ou pneumatique.

Par ailleurs, dans l'exemple représenté sur les figures 2 et 3, la cloison rigide 5 peut comporter trois plaques radiales superposées, réalisées en métal ou en matière plastique et serrées entre la base 4b du corps en élastomère et le ressaut 9a du couvercle :
- une première plaque 25 disposée vers la chambre de travail A et formant en son centre une première grille de butée 26 en forme de disque, cette première plaque 25 comportant à sa périphérie externe un canal 27 qui est ouvert sur toute sa longueur à l'opposé de la chambre de travail A et qui comporte également une ouverture 27a vers la chambre de travail,
- une deuxième grille de butée 29 en forme de disque, disposée en correspondance avec la première grille 26 sous la première plaque 25,
- une deuxième plaque 28 annulaire disposée sous la première plaque 25 et la deuxième grille de butée 29, comportant une ouverture centrale 28a en correspondance avec la membrane de commande 6a et les grilles de butée 26, 29, la deuxième plaque comprenant une ouverture disposée en correspondance avec la chambre auxiliaire et obturée de façon étanche par la partie 6a de la membrane 6.

La deuxième plaque 28 délimite le passage étranglé C avec la première plaque 25, et comporte une ouverture 27b (figure 4) qui fait communiquer le passage étranglé C avec la chambre de compensation B.

La deuxième plaque 28 comporte en outre, sur sa face supérieure, une cuvette délimitant la chambre auxiliaire E, ainsi qu'un canal de faible épaisseur qui délimite le passage étranglé D et fait communiquer le passage étranglé C avec la chambre auxiliaire E (voir les figures 2 et 4).

Les grilles de butées 26, 29 délimitent entre elles un logement 30 dans lequel est engagée une membrane de découplage 31 en élastomère, pouvant présenter toute forme connue. Comme représenté plus en détail sur la figure 3, la membrane de découplage 31 est montée avec un certain jeu e par rapport à chaque grille de butée 26, 29, de façon à pouvoir librement débattre entre les grilles de butée 26, 29. Le jeu e est typiquement de l'ordre de quelques dixièmes de millimètre, par exemple environ 0,5 mm. La membrane de découplage 31 peut être localement pincée entre les grilles de butée 26, 29, par exemple au niveau de la périphérie 31a de ladite membrane de découplage 31. Les grilles de butée 26, 29 et la membrane de découplage 31 forment ensemble un clapet de découplage dont la fonction est d'absorber les vibrations de relativement haute fréquence (supérieures à 20 Hz) et de relativement faible amplitude (de l'ordre de 0,5 mm et inférieures). Grâce au deuxième passage étranglé D, la chambre auxiliaire E est toujours à même pression que la chambre de travail lorsque le véhicule ne fonctionne pas, de sorte que cet écartement e de part et d'autre de la membrane de découplage est maintenu malgré la pression créée dans la chambre de travail par le poids du moteur du véhicule.

Le dispositif qui vient d'être décrit fonctionne comme suit.

Lorsque le moteur du véhicule fonctionne dans certaines conditions prédéfinies, par exemple au ralenti, le calculateur du véhicule active l'électro-aimant 23 l'ouverture du clapet de sortie d'air 16, de sorte que la chambre pneumatique P communique avec l'atmosphère, ce qui permet à la membrane 6a de se déplacer librement : dans ce mode de fonctionnement, les vibrations du moteur sont transmises à la chambre de travail A par le corps en élastomère 4, ce qui provoque des fluctuations du volume de ladite chambre de travail. Ces fluctuations de fréquence supérieures à 20 Hz et de relativement faibles amplitude, sont absorbées par le clapet de découplage 26, 29, 31.

Dans d'autres conditions prédéterminées, par exemple pendant le roulage du véhicule (c'est-à-dire notamment lorsque le régime moteur est supérieur à une certaine limite prédéterminée), le calculateur du véhicule cesse d'activer l'électro-aimant, de sorte que le clapet de sortie d'air 16 revient en position de fermeture sous l'action du ressort 18. Dans ce mode de fonctionnement, les déplacements vibratoires du moteur, de relativement grande amplitude et de fréquence généralement comprise entre 5 et 20 Hz, notamment entre 8 et 12 Hz (mouvements dits de « hachis »), se traduisent par des variations de volume de relativement grande amplitude de la chambre de travail A, qui entraînent des déformations de la chambre de compensation B, de sorte que le passage étranglé C est alors le siège de phénomènes de résonance permettant un amortissement des vibrations dans de bonnes conditions.

De plus, au début de l'établissement de ce mode de fonctionnement, la chambre pneumatique P contient encore de l'air, de sorte que la partie 6a de la membrane 6 peut se déplacer, mais ces mouvements chassent l'air de la chambre pneumatique P au travers du clapet de sortie d'air 16. Lorsque quasiment tout l'air contenu dans la chambre P a été chassé, la partie 6a de la membrane 6 reste sensiblement plaquée contre la surface supérieure 13 de la paroi radiale 12 (position représentée en traits mixtes sur la figure 2), et la chambre hydraulique auxiliaire E ne peut donc plus se déformer. De plus, le liquide ne traverse pas le passage étranglé D aux fréquences de hachis, de sorte que la membrane de découplage est immobilisée. Le clapet de découplage est donc désactivé dans ce mode de fonctionnement. On notera que la partie 6a de la membrane 6 est mobile sur un débattement de plusieurs millimètres par rapport à sa position médiane, ce qui permet d'optimiser l'efficacité de la désactivation du clapet de découplage.

Le support antivibratoire qui vient d'être décrit est particulièrement bien adapté pour des moteurs à 3 cylindres ou ayant des modes de fonctionnement sur 3 cylindres.

## Revendications

1. Support antivibratoire hydraulique pilotable destiné à être interposé aux fins d'amortissement entre des premier et deuxième éléments rigides, ce support antivibratoire comprenant :
- des première et deuxième armatures (2, 3) destinées à être fixées aux deux éléments rigides à réunir,
- un corps en élastomère (4) qui relie entre elles les première et deuxième armatures (2, 3) et qui délimite au moins partiellement une chambre de travail (A),
- une chambre de compensation (B) déformable qui communique avec la chambre de travail (A) par l'intermédiaire d'un premier passage étranglé (C), la chambre de compensation (B), la chambre de travail (A) et le premier passage étranglé (C) formant un volume hydraulique rempli de liquide, le premier passage étranglé ayant une fréquence de résonance comprise entre 5 et 20 Hz,
- une chambre auxiliaire (E),
- un clapet de découplage (26, 29, 31) comprenant :
. une membrane de découplage (31) en élastomère qui sépare la chambre de travail (A) et la chambre auxiliaire (E),
. et des première et deuxième grilles de butée (26, 29) communiquant respectivement avec la chambre de travail (A) et avec la chambre auxiliaire (E), la membrane de découplage (31) étant disposée entre les première et deuxième grilles de butée (26, 29) et à distance de chaque grille de butée pour pouvoir librement débattre entre lesdites première et deuxième grilles de butée,
- un dispositif de commande (15) adapté pour sélectivement bloquer la membrane de découplage (31), **caractérisé en ce que** la chambre auxiliaire (E) est remplie de liquide et communique avec ledit volume hydraulique par l'intermédiaire d'un deuxième passage étranglé (D) ayant une fréquence de résonance inférieure à 5 Hz,
**en ce qu'**il comporte en outre une chambre de commande pneumatique (P) séparée de la chambre auxiliaire (E) par une paroi mobile (6a),
et **en ce que** le dispositif de commande (15) est adapté pour sélectivement soit mettre à l'air libre ladite chambre de commande pneumatique (P), soit vider ladite chambre de commande pneumatique de façon à bloquer ladite paroi mobile (6a).

2. Support antivibratoire selon la revendication 1, dans lequel le dispositif de commande (15) comporte un clapet de sortie d'air (16) autorisant normalement uniquement une sortie d'air depuis la chambre de commande pneumatique (P) vers l'atmosphère et non l'inverse, et un dispositif de mise à l'air (23) actionnable pour sélectivement mettre à l'air libre ladite chambre de commande pneumatique (P).

3. Support antivibratoire selon la revendication 2, dans lequel la chambre de commande pneumatique (P) est délimitée entre une cuvette (13) et la paroi mobile (6a) qui est une membrane de commande (6a) en élastomère, le clapet de sortie d'air (23) communiquant avec la chambre de commande pneumatique (P) par une ouverture (14) ménagée dans la cuvette (13) et la membrane de commande étant adaptée pour se plaquer contre la cuvette (13) sous l'effet du clapet de sortie d'air lorsque le dispositif de mise à l'air (23) n'est pas actionné.

4. Support antivibratoire selon l'une quelconque des revendications précédentes , dans lequel la chambre de compensation (B) est séparée de la chambre de travail (A) par une cloison rigide (5) qui est solidaire de la deuxième armature (3), ladite cloison rigide comportant les première et deuxième grilles de butée (26, 29), le premier passage étranglé (C), le deuxième passage étranglé (D), la chambre auxiliaire (E) et la membrane de découplage (31).

5. Support antivibratoire selon la revendication 4, dans lequel la cloison rigide (5) comporte des première et deuxième plaques superposées(25, 28), la première plaque (25) comprenant la première grille de butée (26), la deuxième grille de butée (29) étant serrée entre les première et deuxième plaques (25, 28), la deuxième plaque (28) comprenant une ouverture (28a) disposée en correspondance avec la chambre auxiliaire (E) et obturée de façon étanche par ladite paroi mobile (6a), constituée par une membrane de commande en élastomère.

6. Support antivibratoire selon l'une quelconque des revendications précédentes, dans lequel la membrane de découplage (31) est montée entre les première et deuxième grilles de butée avec un jeu (e) inférieur à 1 mm par rapport à chaque grille et la paroi mobile (6a) est mobile sur un débattement de plusieurs millimètres par rapport à sa position médiane.
